# EUROPEAN PATENT APPLICATION

(11) **EP 0 847 911 A2**
(43) Date of publication of application: **17.06.1998**
(21) Application number: 97120820.2
(22) Date of filing: 27.11.1997
(51) Int. Cl.: B62D 7/15

(54) **Power-assisted steering system for a vehicle provided with a front axle and a rear axle, both of which are equipped with steered wheels**

(30) Priority: 10.12.1996 IT BO960645
(71) Applicant: R.C.D. S.r.l., 40069 Zola Predosa (Bologna) (IT)
(72) Inventor: Biondi, Armando, 40010 Sala Bolognese (Bologna) (IT)
(74) Representative: Modiano, Guido, Dr.-Ing.

(57) **Abstract**

A power-assisted steering system for a vehicle provided with a front axle (3) and a rear axle (16), both of which have steered wheels (1, 2, 14, 15), and comprising: an articulated four-sided linkage system (19, 20, 21) for steering the rear wheels (14, 15), which is composed of a bar (21) which is parallel to the axle (16) and whose ends are articulated to arms (19, 20) which are rigidly coupled to the wheels (14, 15); a hydraulic actuator (23), which is constituted by a double-action hydraulic jack which acts on the four-sided steering linkage system (19, 20, 21) and has a piston (24) which forms two chambers (25, 26) which can be connected to a hydraulic pressure source by means of a two-way, three-position distributor (29) which has a slide valve (37) controlled by a steering selection unit (13) which is actuated by the steering wheel; the unit (13) can be selected so as to actuate the distributor (29) into a position in which the actuator (23) steers the rear wheels (14, 15) in the opposite direction with respect to the front wheels (1, 2) or into a position in which said actuator (23) steers the rear wheels (14, 15) in the same direction as the front wheels (1, 2).

## Description

The present invention relates to an improvement to a power-assisted steering system for a vehicle provided with a front axle and a rear axle, both having steered wheels.

The invention is meant to be used in the steering of the front and rear wheels, so that vehicle can follow a curved path of the "concentric" type, so as to reduce the turning radius, or perform lateral movements of the "crab" type, improve the maneuverability of the vehicle and reduce tire wear.

Italian patent applications BO92A000327, BO95A000029 and European patent application 97100704.2 have proposed systems for steering a rear axle provided with steered wheels.

The aim of the present invention is to provide a new system for the power-assisted steering of the rear wheels in the same direction, or in the opposite direction, with respect to the front wheels, as a function of the steering angle of the front wheels and of the speed of the vehicle.

Another object of the present invention is to provide a system which is structurally simple and functionally very reliable.

This aim, this object and others which will become apparent hereinafter are achieved with a power-assisted steering system whose characteristics are defined in the appended claims.

Further characteristics and advantages of the present invention will become apparent from the following detailed description on the basis of the accompanying drawings, wherein:
figure 1 is a diagram of a hydraulic system according to the present invention, applicable to a vehicle with a front axle and a rear axle which are both equipped with steered wheels;
figure 2 is an enlarged-scale view of part of the system of figure 1;
figures 3, 4 and 5 are a plan view and side views of the steering control device;
figures 6 and 7 are sectional views, taken along the planes VI-VI and VII-VII of figure 3.

With reference to the above figures, the reference numerals 1 and 2 designate the two leading wheels of a motor vehicle provided with power-assisted steering on the front axle.

The wheels 1 and 2 are mounted, so that they can be orientated, on an axle 3 and can be steered by means of a four-sided linkage system composed of a pair of arms 4, 5 which are articulately connected to each other by a transverse bar 6. A second arm 7 is rigidly coupled to the arm 5 and is connected, by means of a traction element 8, to the actuation lever 9 of a hydraulic steering unit, generally designated by the reference numeral 10, capable of causing the oscillation of the lever 9 in one direction or the other when the steering wheel 11 is actuated.

A traction element 12 of the flexible-cable type is fastened in a median point of the lever 9 and connects said lever 9 to a device, generally designated by the reference numeral 13, through which the oscillations of the lever 9 caused by the actuation of the steering wheel 11 are transmitted to the rear of the vehicle in order to steer the steered wheels 14, 15 of the rear axle.

The wheels 14, 15 are mounted, so that they can be steered, on an axle which is constituted by a tubular beam 16. The pivots 17, 18 that rotatably support the wheels 14, 15 are articulated to the opposite ends of the tubular beam 16.

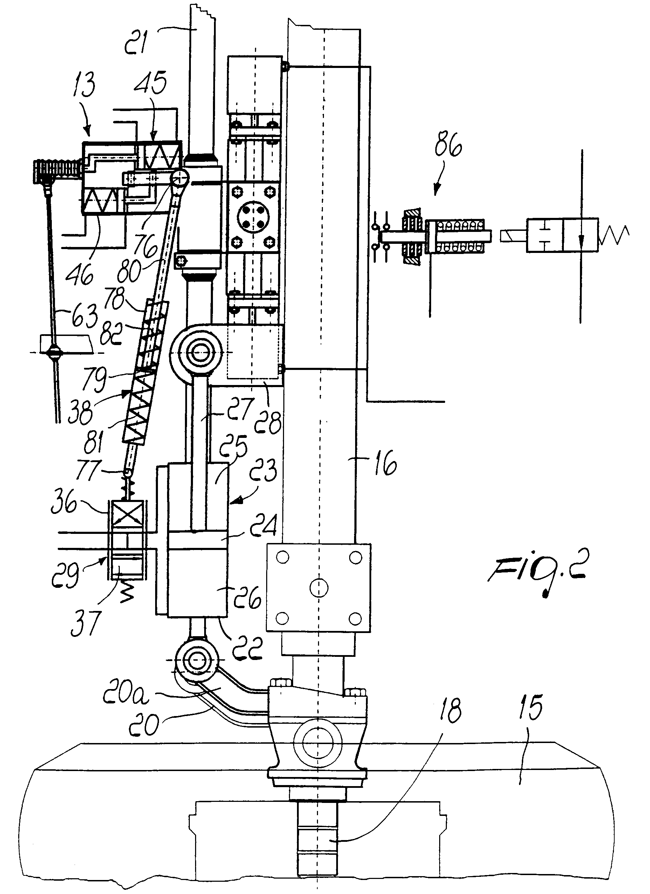

Two respective arms 19, 20 are rigidly coupled to the pivots 17, 18 and are mutually connected by a bar 21 which forms, together with said arms, the four-sided linkage system for the steering of the rear wheels 14, 15. A further arm 20a (see figure 2) is rigidly coupled to the pivot 18, and the cylinder 22 of a double-action hydraulic jack 23 is coupled to said arm 20a; the piston 24 of said jack divides the inside of the cylinder into two chambers 25, 26 and is connected, by means of the stem 27, to an extension 28 which is rigidly coupled to the beam 16.

The chambers 25, 26 can be connected, by means of a distributor 29 and ducts 30, 31, to the delivery of a pump 32 which is driven by a motor 33 to feed pressurized oil and, respectively, to a reservoir 34 for collecting the oil, through a filter 35. In order to allow to feed the oil into either one or the other of the chambers 25, 26 or to short-circuit the oil delivery, the distributor 29 is of the two-way, three-position type. Said distributor has a body 36 which is rigidly coupled to the cylinder 22 and a slide valve 37 which is controlled, by means of a rod 38, by the device 13, hereinafter termed selection device in view of its function of selecting the steering direction of the rear wheels with respect to the steering direction of the front wheels and the extent of the steering action, chosen between two extreme permitted values which are a function of the speed of the vehicle.

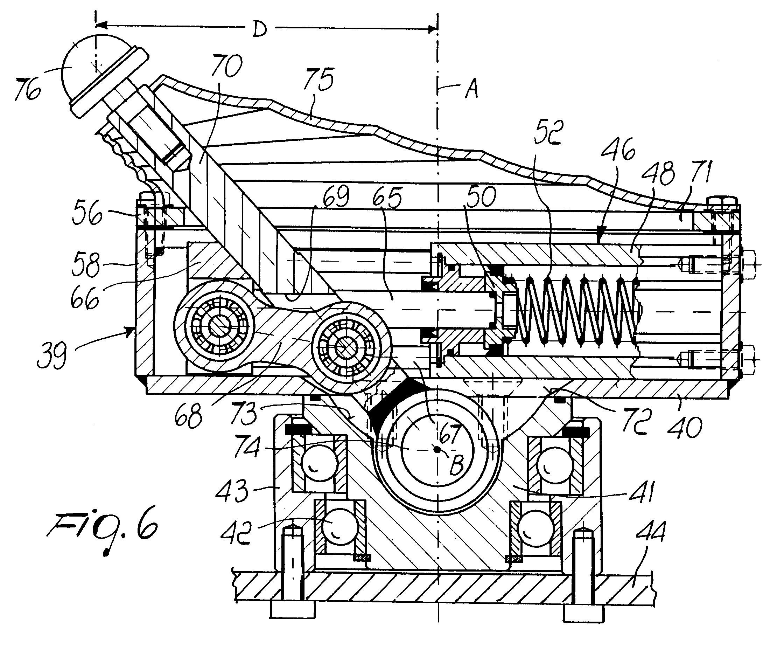

The device 13 comprises a box-like body 39 (see figures 2-7) which has a prism-like rectangular shape; a pivot 41 is rigidly coupled to the bottom 40 of said body and protrudes downward.

The pivot 41 is supported so that it can rotate, by means of bearings 42, in a bush 43 which is fixed on a bracket 44 of the beam of the vehicle.

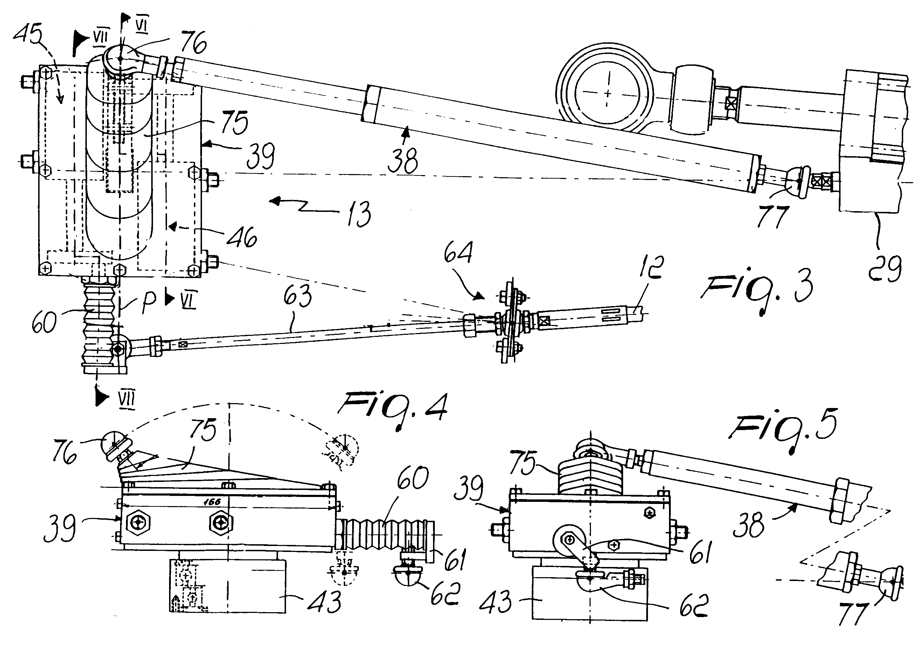

The box-like body 39 internally accommodates two pneumatic jacks 45, 46 (see figure 3) which have parallel but oppositely directed axes.

Each jack 45, 46 comprises a cylinder 47, 48 inside which a piston 49, 50 slides in contrast with a return spring 51, 52.

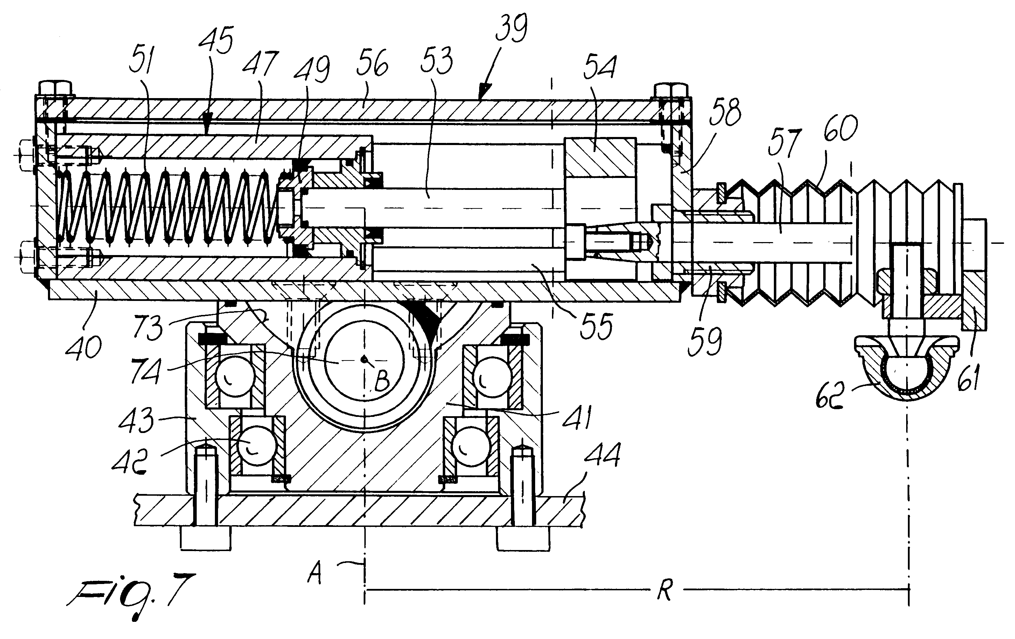

A stem 53 is rigidly coupled to the piston 49 of the jack 45, and a cross-member 54 is fixed to the end of said stem and guided in the box-like body 39. Two rods are fixed to the cross-member 54; said rods are parallel to the stem 53 and are slidingly guided in holes of the cylinder 47; one rod, designated by the reference numeral 55 in figure 7, is adjacent to the bottom 40 of the box-like body 39, while the other one, not shown in the drawing, is adjacent to the cover 56 that closes the box-like body 39.

A stem 57 is also fixed to the cross-member 54, is parallel to the stem 53 and protrudes from a side wall 58 of the box-like body 39 through a guiding bush 59.

The stem 57 and the guiding bush 59 are protected by a rubber bellows-like element 60.

An L-shaped element 61 is fixed to the end of the stem 57, and the end 63 of the flexible-cable traction element 12 (see figure 2) is connected to said L-shaped element by means of a ball joint 62.

The end 63 is constituted by a bar which is guided in a spherical support 64 (see figure 3) which is fitted on the chassis of the vehicle. When, by actuating the steering wheel 11, the flexible cable 12 is pulled, the end 63 slides in the support 64, rotating the box-like body 39 in the bush 43 about the axis A.

In a manner similar to what has been described above, a stem 65 (see figure 6) is rigidly coupled to the piston 50 of the jack 46, and a cross-member 66 is fixed to the end of said stem. Two rods 67, guided in holes of the cylinder 48, extend from the cross-member 66. The cross-member 66 extends laterally towards the centerline plane P (see figure 3) of the box-like body 39, and a linkage 68 is articulated thereto and lies on said centerline plane P. The other end of the linkage 68 is articulated to an opening 69 which is formed in a median position of a lever 70.

The lever 70 has an upper end which protrudes out of the cover 56 to the box-like body 39 through a slot 71 which lies on the plane P. An opening 72 is formed in the bottom 40 of the box-like body 39 and a seat 73 is formed at said opening 72 in the pivot 41. The lower end of the lever 70 extends through the opening 72 into the seat 73, where it is pivoted by means of a pivot 74 about the axis B, which is perpendicular to the axis A.

The slot 71 is closed by a rubber bellows-like element 75, which is fixed to the cover 56 and around the lever 70.

One end of the rod 38 is rigidly coupled to the top of the lever 70, and its opposite end is rigidly coupled to the slide valve 37 of the distributor 29. The couplings of the rod 38 to the lever 70 and to the slide valve 37 are constituted by ball joints 76, 77 to allow movements of the rod 38 with three degrees of freedom.

In order to be able to perform said movements, the rod 38 is of the kind which can be extended and compressed elastically. For this purpose, the rod 38 is constituted by a sleeve 78 (see figure 2) which is articulated to the slide valve 37 and inside which a piston 79 slides; a stem 80 protrudes from said piston and is articulately connected to the lever 70. Two springs 81, 82 are accommodated in the chambers into which the piston 79 divides the sleeve 78, act on the piston 79 and keep it elastically in a central equilibrium position.

From the above description it is evident that by actuating the jack 45 so that it extends or retracts, the radius R between the coupling point of the end 63 of the flexible-cable traction element at the end of the stem 57 (see figure 7) and the rotation axis A of the box-like body 39 is varied between two values. Accordingly, by means of the rod 38, a proportional movement of the slide valve 37 of the distributor 29 occurs.

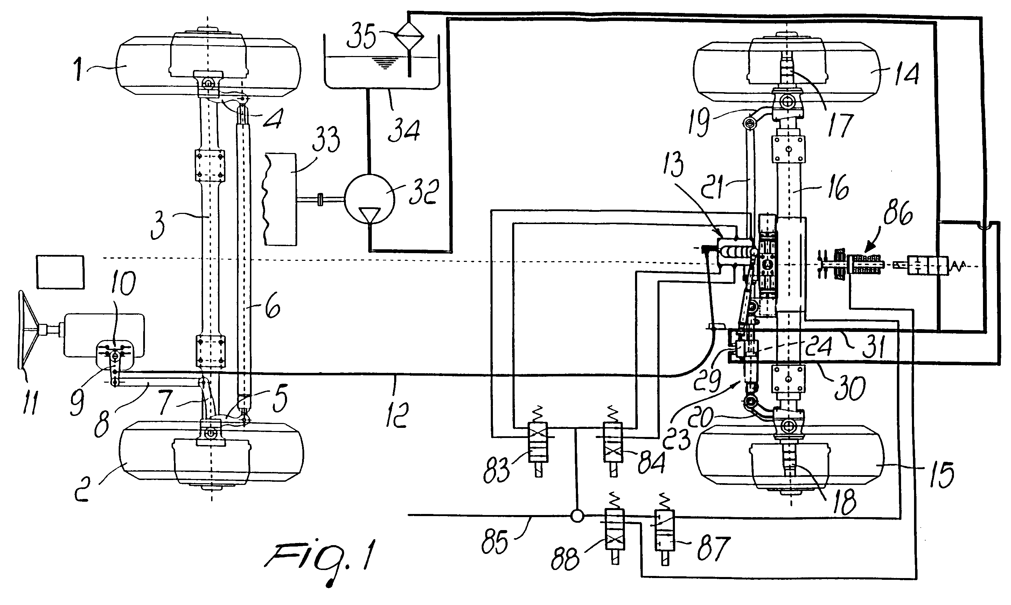

By activating the jack 46, the lever 70 oscillates about the pivot 74 and therefore the coupling point 76 of the rod 38 does the same, tracing an arc centered on the axis B of the pivot 74. In order to actuate the jacks 45 and 46 a connection is provided by means of electric valves 83, 84 (see figure 1) to a supply of compressed air 85.

Finally, the numeral 86 generally designates a unit for centering and locking the rear wheels 14 and 15 during straight-line travel, which is connected to the supply of compressed air 85 by means of electric valves 87, 88; reference is made to the above cited Italian patent application no. BO95A000029 for its structure and operation.

The operation of the described system is as follows, bearing in mind that the driver can choose among three travel options.
a) normal travel, with the rear wheels locked during straight-line travel and steering achieved by steering only the front wheels. During curves, the vehicle moves along the normal towing path.
b) travel with rear wheels which steer in the opposite direction with respect to the front wheels. During this kind of travel (earlier referenced as concentric travel), the vehicle, for an equal steering angle of the leading wheels 1 and 2, is capable of making turns with a smaller turning radius than normal-travel curves. When a preset speed is exceeded, the steering angle of the rear wheels is smaller than the angle allowed below said preset speed.
c) travel with rear wheels which steer in the same direction as the front wheels. During this kind of travel (referenced earlier as "crab" travel), the vehicle is capable of performing lateral movements, travelling parallel to itself.

In normal travel conditions, the deliveries towards the jacks 45, 46 and the jack 23 are connected to the discharge, while the unit 86 is in the position in which the rear wheels 14, 15 are locked in the straight-line travel position.

Accordingly, hydraulic power-assistance to the rear axle is not provided and therefore only the front wheels 1 and 2 are steered by turning the steering wheel 11. Since the four-sided linkage system 19-21 is locked, the rotation of the box-like body 39 actuated by the steering wheel by means of the cable 12 in fact simply compresses the springs 81, 82 of the rod 38.

In concentric-travel conditions, the unit 86 is released in order to allow the oscillation of the four-sided linkage system 19-21 for steering the rear wheels. Assuming a situation in which the jack 45 is at its maximum extension (i.e., the distance R between the joint 62 and the axis A is greatest) and the lever 70 is turned over on the side of the box-like body which lies opposite to the one from which the stem 54 of the jack 45 protrudes (a position shown in figures 2, 3, 4 and 5), the actuation of the steering wheel 11 causes, by means of the flexible cable 12 and its end 63, a rotation of the box-like body 39 and a corresponding movement of the slide valve 37 of the distributor 29 by means of the lever 70 and the rod 38. The pressurized oil fed by the pump 32 is therefore conveyed into the chamber 25 or 26 by the jack 23.

Accordingly, the rear wheels 14, 15 steer in one direction or the other, depending on the direction in which the steering wheel 11 is turned, determining the direction of the movement of the slide valve 37 and achieving concentric travel.

The rotation of the rear wheels in the angular position which is proportional and opposite to the position of the front wheels is stopped by the movement of the body 36 of the distributor 29, which is rigidly coupled to the cylinder 22, with respect to the slide valve 37. The movement in fact continues until the distributor has again reached the neutral position of figure 2.

It is evident, from what has been described, that the obtainable steering angle depends on the ratio between the radius R and the distance D between the coupling 76 and the axis A (see figure 6). The higher this ratio, the smaller the movement that the slide valve 37 of the distributor 29 must perform to reach the neutral position and therefore the smaller the steering angle of the rear wheels 14, 15.

A maximum ratio R/D can be used for high speeds of the vehicle and can be set automatically by means of a sensor which detects the speed of the vehicle and actuates the valve 83 so that the jack 45 is actuated into the maximum elongation position, at which the actuation of the steering wheel 11 causes only small oscillations of the box-like body 39 and therefore small strokes of the rod 38 and of the slide valve 37.

Viceversa, in order to have a wider steering angle of the rear wheels 14 and 15, said speed sensor actuates the valve 83 so as to shorten the jack 45. Thus it is possible to obtain a reduction in the R/D ratio and, for an equal angular movement of the steering wheel 11, a greater stroke of the rod 38 and of the slide valve 37, which is matched by a greater steering of the rear wheels.

In order to arrange the front wheels 1, 2 and the rear wheels 14, 15 of the vehicle in the same direction, for example parallel to each other, to allow the vehicle to move laterally with respect to its longitudinal axis (crabbing), starting from the above-described straight-line travel position it is sufficient to reverse the movement of the slide valve 37 of the distributor 29 to cause the jack 23 to perform a movement which is the opposite of the movement provided for concentric travel.

For this purpose, by activating the valve 84 by means of a manual control actuated by the driver of the vehicle, the jack 46 is actuated so that the lever 70 turns in the opposite direction with respect to the axis A. In this manner, the stroke of the rod 38 is reversed with respect to the straight-line travel condition, orientating the rear wheels in the same direction as the front wheels.

The above-described system is susceptible of numerous modifications and variations, all of which are based on the same inventive concept. For example, in order to achieve the oscillation of the lever 70 it is possible to provide a gear system composed of a rack which is formed on the stem 65 and meshes with a toothed sector which is rigidly coupled to the lever 70 and concentric to the pin 74. An additional variation for achieving a variable R/D lever ratio entails, for example, the introduction of air in the cylinders 45, 46 with a pressure which is proportional to the loading of the spring 51, 52, so as to determine an intermediate arrangement of the stems 53, 65.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A power-assisted steering system for a vehicle provided with a front axle (3) and a rear axle (16), both of which have steered wheels (1, 2, 14, 15) and comprising: an articulated four-sided linkage system (19, 20, 21) for steering the rear wheels (14, 15), which is composed of a bar (21) which is parallel to the axle (16) and whose ends are articulated to arms (19, 20) which are rigidly coupled to the wheels (14, 15); a hydraulic actuator (23), which is constituted by a double-action hydraulic jack which acts on the four-sided steering linkage system and has a piston (24) which forms two chambers (25, 26) which can be connected to a hydraulic pressure source by means of a two-way, three-position distributor (29) which has a slide valve (37) controlled by a steering selection unit (13) which is actuated by the steering wheel (11); said unit (13) being selectable so as to actuate said distributor (29) into a position in which said actuator (23) steers the rear wheels (14, 15) in the opposite direction with respect to the front wheels (1, 2) or into a position in which said actuator (23) steers the rear wheels (14, 15) in the same direction as the front wheels (1, 2); characterized in that said steering selection unit (13) comprises: a box-like body (39) which is supported so that it can rotate on the chassis (44) of the vehicle; a flexible cable (12), which is connected to said box-like body (39) and is actuated by said steering wheel (11) so that the actuation of the steering wheel (11) causes the rotation, in one direction or the other, of said box-like body (39); a lever (70) which is supported so that it oscillates in said box-like body along an axis (B) which is perpendicular to the rotation axis (A) of said body and is controlled by a first jack (46) which is actuated, by virtue of valve means (84) so that said lever (70) assumes two mutually angularly offset positions which correspond to the stroke limits of said jack (46); an elastic traction element (38) in which the opposite ends are connected to said lever (70) and to said slide valve (37) so that said traction element (38) can actuate said slide valve (37) in one direction or the other according to the position of said lever.

2. A system according to claim 1, characterized in that it comprises a second jack (45) which is accommodated in said box-like body (39) and has a stem (53) at the end (62) of which said flexible cable (12) is connected, said stem (53) being actuatable, by virtue of valve means (83), between two positions, so as to vary between two values the distance (R) between said end (62) and the rotation axis (A) of said box-like body (39).

3. A system according to claim 1, characterized in that said first jack (46) is connected to said lever (70) by means of a linkage (68) whose ends are articulated to a stem (65) of said first jack (46) and to said lever (70).

4. A system according to claim 3, characterized in that the stem of said first jack (46) is provided with a rack which meshes with a toothed sector which is rigidly coupled to said lever and concentric to the oscillation axis (B) of said lever.

5. A system according to claim 2, characterized in that in order to obtain a selection device (13) having a variable lever ratio, air is fed into said first and second jacks of said device with pressures which are directly proportional to the preset variability of the lever ratio.

6. A system according to claim 1, characterized in that it comprises a locking device (86) which acts on the four-sided steering linkage system (19, 20, 21) of the rear wheels and is adapted to block said linkage system in the position for centering the rear wheels (14, 15) which corresponds to the straight-line travel path of the vehicle.
